# EUROPÄISCHE PATENTSCHRIFT

(11) **EP 1 191 351 B1**
(45) Veröffentlichungstag und Bekanntmachung des Hinweises auf die Patenterteilung: **15.10.2008**
(21) Anmeldenummer: 01120210.8
(22) Anmeldetag: 23.08.2001
(51) Int. Cl.: G01V 1/20

(54) **Unterwasserschleppantenne**
Underwater towed array
Antenne remorquée sous-marine

(30) Priorität: 23.09.2000 DE 10047241
(43) Veröffentlichungstag der Anmeldung: 27.03.2002
(73) Patentinhaber: ATLAS ELEKTRONIK GMBH, 28305 Bremen (DE)
(72) Erfinder: Busch, Rainer, Dr., 26131 Oldenburg (DE)

(56) Entgegenhaltungen:
- DE-A- 3 739 184
- DE-C- 19 518 461
- DE-C- 19 812 356
- FR-A- 2 573 269
- GB-A- 142 096
- GB-A- 2 144 308
- US-A- 3 221 296
- US-A- 3 660 809
- US-A- 3 805 226
- US-A- 4 736 345
- DATABASE WPI Section EI, Week 198011 Derwent Publications Ltd., London, GB; Class V06, AN 1980-C4390C XP002284762 -& SU 671 039 A (CHAMOV A N), 2. Juli 1979 (1979-07-02)

## Beschreibung

Die Erfindung betrifft eine Unterwasser-Schleppantenne der im Oberbegriff des Anspruchs 1 definierten Gattung.

Bei einer bekannten Schleppantenne dieser Art (DE 198 12 356 C1) wird die Abstützung der Hydrophone an der Schlauchhülle durch in Längsrichtung beabstandete Formstücke aus Metallschaum vorgenommen, in die die Hydrophone zentral eingesetzt sind. Die Hydrophone sind an elektrischen Leitungen zur Signalübertragung angeschlossen. Die Formstücke sind auf einem den Schlauch durchziehenden Zugseil festgelegt. Der Schlauch ist mit Öl gefüllt, dessen spezifische Dichte an das bevorzugte Einsatzgebiet und der bevorzugten Einsatzart der Schleppantenne angepaßt ist, um die Schleppantenne in einer bestimmten Wassertiefe auszulegen und zu schleppen.

Bei einer ebenfalls bekannten Unterwasser-Schleppantenne (DE 195 18 461 C1) ist als Füllmittel ein Gel gewählt, das die Hydrophone allseits gleichmäßig umschließt und so im wesentlichen mittig im Schlauch fixiert. Das Füllmittel ist ein Zwei-Komponenten-Silikonkautschuk, dessen beide Komponenten dünnflüssig und von hoher Fließfähigkeit sind und bei Raumtemperatur zu einem gelartigen Vulkanisat aushärten. Das Einziehen der Hydrophone in den Schlauch und das Befüllen des Schlauchs mit dem noch flüssigen Füllmittel muß einigermaßen sorgfältig durchgeführt werden, um einen exakten Abstand der Hydrophone voneinander und eine annähernd schlauchmittige Position der Hydrophone zu gewährleisten, damit sich zwischen den Hydrophonen und der Schlauchhülle eine ausreichend gleichmäßige dicke Gelschicht einlagern kann. Eine Änderung des spezifischen Gewichts der fertigen Schleppantenne bei Wechsel des Einsatzgebietes ist nicht möglich, vielmehr muß die Schleppantenne bei Wunsch nach einer anderen Schlepptiefe ausgetauscht bzw. gewechselt werden. Ebensowenig ist der Austausch defekter Hydrophone möglich.

Bei einer bekannten Unterwasser-Schleppantenne (DE 37 39 184 A1) sind in dem den akustischen Teil der Schleppantenne bildenden Schleppstrang Abstandshalter aus Polyurethan angeordnet, die einerseits auf einem im Innern der Schlauchhülle des Schleppstrangs zentral verlaufenden Kabelbaum aufgeklipst sind und sich andererseits an der Schlauchhülle abstützen. Der im wesentlichen die Form einer Garnrolle aufweisende Abstandshalter nimmt in einer Ausnehmung im Halterkörper eine Mehrzahl von äquidistant angeordneten Hydrophonen auf, die an im Kabelbaum verlaufende Signalleitungen angeschlossen sind.

Bei einem bekannten Seimikstreamermit einem mit Hydrophonen besetzten Schleppschlauch (US 3 660 809) sind im Schlauchinnern zylindrische Distanzstücke mit Abstand voneinander angeordnet, die sich an der Schlauchhülle ringsum abstützen und um 60° Umfangswinkel gegeneinander versetzte, axiale Durchgangsbohrungen aufweisen. Durch drei um 120° Umfangswinkel gegeneinander versetzte Durchgangsbohrungen sind Zugkabel und durch weitere drei um 120° Umfangswinkel gegeneinander versetzte Axialbohrungen sind Signalleitungen hindurchgeführt. Zwischen zwei Distanzstücken ist jeweils ein zylinderförmiges Hydrophon angeordnet. Das Hydrophon ist in einer elastischen Montageröhre aus weichem, flexiblem Vinyl-Material aufgenommen, die an ihren beiden Stirnenden jeweils drei einstückig angeformte Finger aufweist, die von der Montageröhre nach außen abstreben. Jeder Finger ist an einem der drei den Schlauch durchziehenden Zugseile befestigt.

Bei einer bekannten Unterwasser-Schleppantenne der eingangs genannten Art (US 5 745 436) sind die vom Hydrophon abstehenden Abstützelemente als radiale Arme ausgebildet, die das Gewicht des Hydrophons und des die Hydrophone miteinander verbindenden Kabelverbundes aufnehmen und an der Schlauchhülle abstützen. Die Arme sind aus flexiblem Gummi oder Kunststoff hergestellt, um Vibrationen, die von der Schlauchhülle auf die Hydrophone übertragen werden, zu dämpfen. Das Schlauchinnere ist mit einer Flüssigkeit gefüllt.

Der Erfindung liegt die Aufgabe zugrunde, eine Schleppantenne der eingangs genannten Art so zu konzipieren, daß in fertigungstechnisch einfacher Weise eine weitgehend mittige Anordnung der Hydrophone im Schlauch gewährleistet ist, ohne ein bestimmtes Füllmittel vorschreiben oder auf die Möglichkeit eines Füllmittelwechsels verzichten zu müssen.

Die Aufgabe ist erfindungsgemäß durch die Merkmale im Anspruch 1 gelöst.

Die erfindungsgemäße Unterwasser-Schleppantenne hat den Vorteil, daß durch die Bewehrung der einzelnen Hydrophone mit weichen, elastisch nachgiebigen Stacheln, aus einem Gel, die Hydrophone beim Einziehen der Hydrophonkette in den Schlauch sich infolge der sich an der Schlauchhülle ringsum abstützenden Stacheln selbsttätig im Schlauch zentrieren. Die Zwischenräume zwischen den Stacheln bieten ausreichend Platz für die Durchführung der elektrischen Leitungen. Das anschließend eingefüllte Füllmittel, das vorzugsweise ein Öl ist, aber auch ein zu einer geleartigen Masse vulkanisierendes Füllmaterial sein kann, füllt die Zwischenräume zwischen den Stacheln nahtlos aus. Im Falle eines seine flüssige Konsistenz beibehaltenen Füllmittels, z.B. Öl, kann das Füllmittel problemlos abgesaugt und wieder ersetzt werden, ohne daß sich die Lage der Hydrophone im Schlauch verändert. Da zur mittigen Halterung der Hydrophone keine weiteren Elemente verwendet werden, wird die Akustik der Hydrophone nicht negativ, z.B. durch Abschattungseffekte, beeinflußt. Darüber hinaus ist auch eine Reparatur der einzelnen Hydrophone möglich. Hierzu muß nach Absaugen des flüssigen Füllmittels die gesamte Hydrophonkette aus dem Schlauch herausgezogen werden. Nach Austausch des defekten Hydrophons wird die Kette wieder in den Schlauch eingezogen und der Schlauch mit Füllmittel befüllt. Bei dieser Prozedur ist die Eigenschaft der Selbstheilung der aus Gel gefertigten Stacheln vorteilhaft, da abgerissene Stacheln problemlos wieder angesetzt werden können. Die einstückige Ausbildung der Stacheln mit einer das Hydrophon umschließenden Gelhülle ermöglicht eine fertigungstechnisch einfache Besetzung der Hydrophone mit Gelstacheln, die zusammen mit der Gelhülle an das Hydrophon angegossen oder angespritzt werden.

Zweckmäßige Ausführungsformen der erfindungsgemäßen Unterwasser-Schleppantenne mit vorteilhaften Weiterbildungen und Ausgestaltungen der Erfindung ergeben sich aus den weiteren Ansprüchen.

Gemäß einer bevorzugten Ausführungsform der Erfindung besitzt jedes Hydrophon die Form einer Kugel und besitzt die an das Hydrophon angegossene Gelhülle die an das Hydrophon angepasste Form einer Kugel, von der die einzelnen Stacheln radial abstreben. Die Stacheln sind dabei so angeordnet und ausgebildet, daß ihre freien Enden auf einer die Gelhülle punktsymmetrisch umschließenden, gedachten Kugelfläche liegen, deren Durchmesser in etwa, d.h. in den Grenzen zugelassener Toleranzen, dem Innendurchmesser des Schlauchs entspricht. Durch die biegeelastischen Eigenschaft der Gelstacheln kann ein relativ breiter Bereich für die Längentoleranz der Stacheln zugelassen werden.

Die Erfindung ist anhand eines in der Zeichnung dargestellten Ausführungsbeispiels im folgenden näher beschrieben. Es zeigen in schematischer Darstellung:
- Fig. 1: eine Seitenansicht einer im Seebetrieb von einem Überwasserschiff geschleppten Unterwasser-Schleppantenne,
- Fig. 2: ausschnittweise einen Längsschnitt eines Akustikteil der Schleppantenne in Fig. 1,
- Fig. 3: einen Schnitt längs der Linie III - III in Fig. 2,
- Fig. 4: ausschnittweise eine Draufsicht eines kugelförmigen Hydrophons mit im Schnitt dargestellter, angegossener Gelhülle und Gelstacheln.

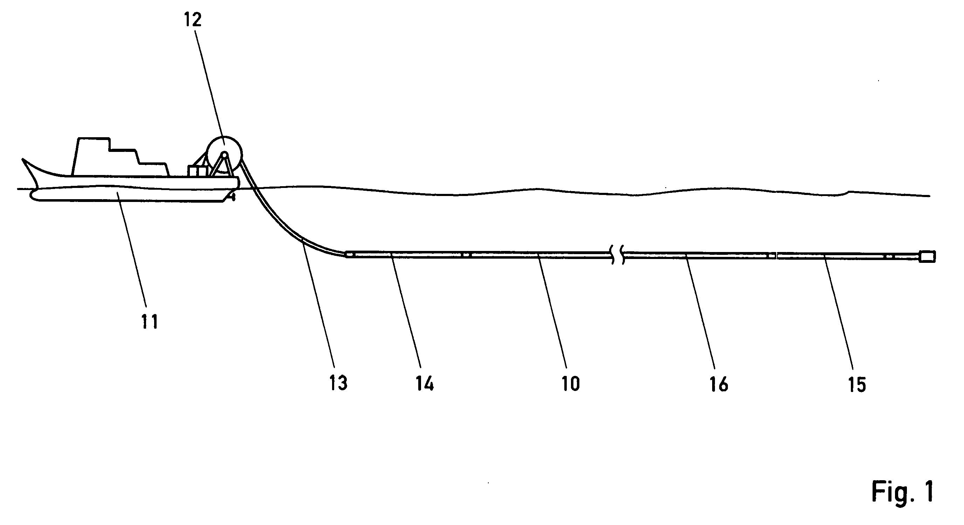

Die in Fig. 1 schematisch in Seitenansicht zu sehende Unterwasser-Schleppantenne wird nach Ausbringen ins Wasser von einem Wasserfahrzeug 11 nachgeschleppt, wobei das Ausbringen und das Einholen der Schleppantenne 10 mittels einer an Bord des Wasserfahrzeugs 11 sich befindlichen, antreibbaren Trommel 12 durchgeführt wird. Die Schleppantenne 10 besteht aus einem Schleppkabel 13, zwei Dämpfungsmodulen 14, 15 und einem zwischen den Dämpfungsmodulen 14, 15 liegenden, hydrophonbesetzten Akustikteil 16 zum Peilen von unter Wasser befindlichen Geräuschquellen. Die Dämpfungsmodule 14, 15 dienen der mechanischen Schwingungsentkopplung des Akustikteils 16.

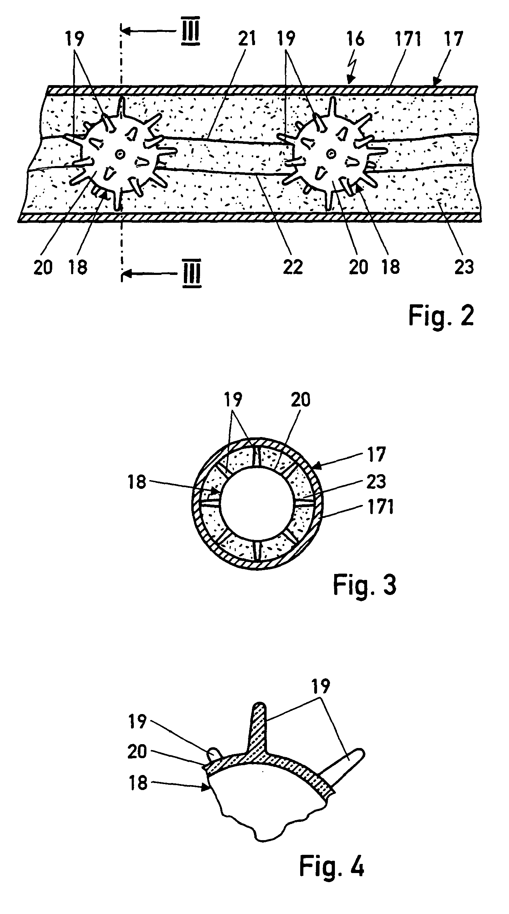

In Fig. 2 ist ein Ausschnitt des Akustikteils 16 der Schleppantenne 10 im Längsschnitt dargestellt. In einem elastischen, zugfesten Schlauch 17 aus Polyethylen (PE) oder Polyurethan (PU), in dessen Schlauchhülle 171 zur Erhöhung der Zugfestigkeit vorzugsweise noch Kohlefasern eingelegt sind, ist eine Vielzahl von Hydrophonen 18 aufgenommen. Die als Piezokeramikkugeln ausgebildeten Hydrophone 18 sind an zwei elektrische Leitungen 19 zur Stromversorgung und Signalübertragung angeschlossen, die durch den Akustikteil 16, den vorderen Dämpfungsmodul 14 und das Schleppkabel 13 bis ins Wasserfahrzeug 11 verlaufen. Die Hydrophone 18 sind äquidistant hintereinander im Schlauch 17 aufgereiht und stützen sich an der Schlauchhülle 171 so ab, daß sie im Schlauch etwa mittig positioniert sind.

Zur Abstützung der Hydrophone 18 an der Innenseite der Schlauchhülle 101 dienen Stacheln 19 aus einem Gel, die zusammen mit einer das kugelförmige Hydrophon 18 umschließenden Gelhülle 20 an das Hydrophon 18 angegossen sind. Gelhülle 20 und Stacheln 19 sind einstückig und in Fig. 3 und vergrößert in Fig. 4 jeweils im Schnitt dargestellt, wobei in beiden Fällen das kugelförmige Hydrophon 18 ungeschnitten dargestellt ist. Die Stacheln 19 verjüngen sich stetig zu ihrem freien Ende hin und sind so bemessen, daß die freien Enden auf einer das kugelförmige Hydrophon 18 mit konstantem Radialabstand (punktsymmetrisch) umschließenden, gedachten Kugelfläche liegen, deren Durchmesser in etwa dem lichten Durchmesser des Schlauchs 17 entspricht. Da durch die Biegeelastizität der aus Gel bestehenden Stacheln 19 diese sich leicht verformen können, kann beim Herstellungsvorgang der Stacheln 19 für deren Länge ein recht großer Toleranzbereich zugelassen werden, was das Angießen der Stacheln 10 mit Gelhülle 20 fertigungstechnisch wesentlich vereinfacht.

Zur Montage des Akustikteil 16 der Schleppantenne 10 werden die mit Stacheln 19 bewehrten Hydrophone 18 durch Anschließen an die elektrischen Leitungen 21, 22 kettenartig mit gleichem Abstand hintereinander aufgereiht. Diese Hydrophonkette wird nunmehr in die Schlauch 17 eingezogen, wobei sich die Hydrophone 18 über die Stacheln 19 an der Schlauchhülle 171 abstützen und damit die Hydrophone 18 sich selbsttätig mittig im Schlauch 17 positionieren. Nach Einziehen der Hydrophonkette wird der Schlauch 10 mit Öl 23 gefüllt, das in Fig. 2 und 3 durch Punktierung schematisch angedeutet ist. Die spezifische Dichte des Öls 23 wird dabei so gewählt, daß der damit verbundene Auftrieb der Schleppantenne sie in einer bestimmten Wassertiefe hält.

## Patentansprüche

1. Unterwasser-Schleppantenne mit einem mit einem Füllmittel (23) befüllten Schlauch (17), in dem eine Vielzahl von Hydrophonen (18) mit Abstand hintereinander aufgereiht und mittels an der Schlauchhülle (171) sich abstützender Abstützelemente, die mit ihrem einen Ende am Hydrophon (18) festgelegt sind und von diesem abstehen, etwa mittig im Schlauch (17) gehalten sind, **dadurch gekennzeichnet, dass** die Abstützelemente als aus einem Gel bestehende, biegeweiche Stacheln (19) ausgebildet sind, die einstückig mit einer das Hydrophon (18) fest umschließenden Gelhülle (20), von dieser ringsum abstehend ausgebildet sind.

2. Schleppantenne nach Anspruch 1, **dadurch gekennzeichnet, dass** die mit Stacheln (19) versehene Gelhülle (20) an das Hydrophon (18) angegossen ist.

3. Schleppantenne nach Anspruch 1 oder 2, **dadurch gekennzeichnet, dass** die Stacheln (19) sich zu ihrem freien Ende hin stetig verjüngen.

4. Schleppantenne nach einem der Ansprüche 2 - 3, **dadurch gekennzeichnet, dass** die Hydrophone (18) Kugel Form besitzen und dass die an das Hydrophon (18) angegossene Gelhülle (20) die an das Hydrophon angepasste Form einer Kugel besitzt und dass die Stacheln (19) so angeordnet und ausgebildet sind, dass ihre freien Enden auf einer die kugelförmige Gelhülle (20) mit konstantem Radialabstand umschließenden, gedachten Kugelfläche liegen, deren Durchmesser innerhalb eines zugelassenen Toleranzbereichs dem Innendurchmesser des Schlauchs (17) entspricht.

## Claims

1. Underwater towed-array antenna having a flexible tube (17) which is filled with a filler (23) and in which a multiplicity of hydrophones (18) are arranged in one or more rows at a distance one behind the other and are held approximately centrally in the flexible tube (17) by means of supporting elements, which are supported on the flexible tube casing (171) and whose free ends are fixed to the hydrophone (18) and project from it, **characterized in that** the supporting elements are in the form of easily flexible spines (19) which are composed of a gel and are formed integrally with a gel casing (20), which surrounds the hydrophone (18) firmly and projects all round from it.

2. Towed-array antenna according to Claim 1, **characterized in that** the gel casing (20) which is provided with spines (19) is cast onto the hydrophone (18).

3. Towed-array antenna according to Claim 1 or 2, **characterized in that** the spines (19) taper continuously towards their free end.

4. Towed-array antenna according to one of Claims 2 or 3, **characterized in that** the hydrophones (18) have a spherical shape and **in that** the gel casing (20) which is cast on the hydrophone (18) is in the form of a sphere matched to the hydrophone, and **in that** the spines (19) are arranged and designed such that their free ends lie on an imaginary spherical surface which surrounds the spherical gel casing (20) at a constant radial distance and whose diameter corresponds, within a permissible tolerance band, to the internal diameter of the flexible tube (17).

## Revendications

1. Antenne remorquée sous-marine comprenant un tuyau (17) rempli d'une masse de remplissage (23) dans lequel une pluralité d'hydrophones (18) sont espacés en ligne les uns derrière les autres et sont maintenus approximativement au centre dans le tuyau (17) au moyen d'éléments d'appui qui prennent appui sur l'enveloppe du tuyau (171), qui sont fixés par une de leurs extrémités à l'hydrophone (18) et qui sont espacés de celui-ci, **caractérisée en ce que** les éléments d'appui sont réalisés sous la forme d'ergots (19) flexibles constitués d'un gel qui sont formés d'une seule pièce avec une enveloppe en gel (20) qui entoure l'hydrophone (18) à demeure et sont espacés de celle-ci de manière annulaire.

2. Antenne remorquée selon la revendication 1, **caractérisée en ce que** l'enveloppe en gel (20) munie d'ergots (19) est surmoulée sur l'hydrophone (18).

3. Antenne remorquée selon la revendication 1 ou 2, **caractérisée en ce que** les ergots (19) se rétrécissent en direction de leur extrémité libre.

4. Antenne remorquée selon l'une des revendications 2 à 3, **caractérisée en ce que** les hydrophones (18) ont une forme sphérique et que l'enveloppe en gel (20) surmoulée sur l'hydrophone (18) possède la forme d'une sphère adaptée à l'hydrophone et que les ergots (19) sont disposés et configurés de telle sorte que leurs extrémités libres reposent sur une surface de sphère imaginaire qui entoure l'enveloppe en gel (20) sphérique avec un écart radial constant et dont le diamètre au sein d'une plage de tolérance admissible correspond au diamètre intérieur du tuyau (17).
